# EUROPÄISCHE PATENTANMELDUNG

(11) **EP 1 364 829 A2**
(43) Veröffentlichungstag der Anmeldung: **26.11.2003**
(21) Anmeldenummer: 03008124.4
(22) Anmeldetag: 07.04.2003
(51) Int. Cl.: B60P 1/64

(54) **Containerfahrzeug**

(30) Priorität: 21.05.2002 DE 20207867 U; 24.03.2003 DE 10313066
(71) Anmelder: Faun Umwelttechnik GmbH & Co., 58638 Iserlohn (DE)
(72) Erfinder: Kirchhoff, Dr. Johannes, 58636 Iserlohn (DE); Stephan, Frank, 59821 Arnsberg (DE)
(74) Vertreter: Gossel, Hans K., Dipl.-Ing.

(57) **Zusammenfassung**

Die vorliegende Erfindung betrifft ein Containerfahrzeug, insbesondere Abfallsammelfahrzeug, zum Transport von Containern, mit einer Containerwechselvorrichtung (10) zum Auf- und Abladen eines Containers, die einen um eine Kippachse (2) schwenkbaren Kipprahmen (1), einen auf dem Kipprahmen (1) verfahrbaren Schlitten (7) sowie einen am Schlitten (7) um eine Greifarmschwenkachse (11) schwenkbar gelagerten Greifarm (8) aufweist, an dem Kupplungsmittel (20) zum Ankuppeln des Greifarms (8) an den Container vorgesehen sind. Erfindungsgemäß zeichnet sich das Containerfahrzeug dadurch aus, dass die Kupplungsmittel (20) eine am Greifarm (8) gelagerte Aufnahmeklaue (21) mit zwei Hakenmäulern, die voneinander beabstandet und durch einen Trennsteg (24) voneinander abgeteilt sind, zum Aufnehmen eines Kettenbocks (30) eines Kettenbockcontainers aufweist.

## Beschreibung

Die vorliegende Erfindung betrifft ein Containerfahrzeug, insbesondere Abfallsammelfahrzeug, zum Transport von Containern, mit einer Containerwechselvorrichtung zum Auf- und Abladen eines Containers, die einen um eine Kippachse schwenkbaren Kipprahmen, einen auf dem Kipprahmen verfahrbaren Schlitten sowie einen am Schlitten um eine Greifarmschwenkachse schwenkbar gelagerten Greifarm umfasst, an dem Kupplungsmittel zum Ankuppeln des Greifarms an den Container vorgesehen sind.

Ein solches Containerfahrzeug ist aus der DE 200 19 391 U1 bekannt. Der Kipprahmen kann durch eine Antriebseinrichtung um eine am hinteren Ende des Fahrzeugrahmens befindliche Querachse aus einer horizontalen, auf dem Fahrzeugrahmen liegenden Containertransportstellung in eine etwa vertikale Ladestellung aufgerichtet werden. Der Schlitten kann mittels eines Schlittenantriebs in Längsrichtung des Kipprahmens entlang diesem verfahren werden. In der Ladestellung des Kipprahmens, in der der Kipprahmen etwa senkrecht steht, wird der Schlitten an das untere Ende des Kipprahmens gefahren. Der am Schlitten an dessen hinteren bzw. unteren Ende angelenkte zumindest eine Schwenkarm wird zum Aufnehmen eines Containers nach unten geschwenkt, so dass sein freies Ende bzw. die daran angeordneten Kupplungsmittel den Container an einer Gegenkupplungseinrichtung greifen können. Zum Aufladen des Containers wird sodann der Schwenkarm am Schlitten hochgeschwenkt und der Schlitten am Kipprahmen nach oben gefahren. Zudem wird der Kipprahmen zurück auf den Fahrzeugrahmen geschwenkt, so dass der Container mit seiner Unterseite auf dem Kipprahmen zu liegen kommt. Der Schlitten wird sodann mit dem am Greifarm angekuppelten Container gänzlich nach vorne gefahren, bis die Vorderseite des Containers an eine Presse, die am vorderen Ende des Kipprahmens anschließt, ankuppelt.

Diese bekannte Containerwechselvorrichtung lässt sich jedoch nicht an beliebige Container ankuppeln. Insbesondere war es bislang unmöglich, mit dieser Containerwechselvorrichtung einen Kettenbockcontainer aufzunehmen, die im Wechselbehälterbereich weit verbreitet Verwendung finden und in einer Vielzahl im Markt vorhanden sind. Sogenannte ACTS-Container besitzen an ihrer Vorderseite einen Kettenbock, der aus einem stangenförmigen Querprofil besteht, das mittels voneinander beabstandeter, stegförmiger Bleche am Containerkorpus starr befestigt ist. Solche Kettenbockcontainer werden mit dem seit Jahren bekannten Kettenwechselgerät aufgeladen, waagrecht abgesetzt oder auch auf Bahnwaggons übergeschoben. Hierzu greift ein Kettenschloss in den genannten Kettenbock. Solche Ketten- bzw. Seilgeräte haben jedoch den Nachteil, dass es beim Aufziehen oder Absetzen eines Containers unkontrollierte Bewegungen durch die verschiedenen Schwerpunktlagen der Container geben kann, da eine hängende Kette oder ein hängendes Seil in Quer- und Längsrichtung keine Stabilität hat.

Der vorliegenden Erfindung liegt daher die Aufgabe zugrunde, ein verbessertes Containerfahrzeug der eingangs genannten Art zu schaffen, das Nachteile des Standes der Technik vermeidet und letzteren in vorteilhafter Weise weiterbildet. Vorzugsweise soll eine weiter verbesserte Containerwechselvorrichtung geschaffen werden, die eine stabile Handhabung der Wechselcontainer beim Auf- und Abladen erlaubt und unkontrollierte Bewegungen dabei vermeidet.

Erfindungsgemäß wird diese Aufgabe durch ein Containerfahrzeug gemäß Anspruch 1 gelöst. Bevorzugte Ausgestaltungen der Erfindung sind Gegenstand der Unteransprüche.

Erfindungsgemäß besitzen also die Kupplungsmittel, die an dem auskragenden Ende des Greifarms der Containerwechselvorrichtung angeordnet sind, eine am Greifarm gelagerte Aufnahmeklaue zum Aufnehmen eines Kettenbocks eines Kettenbockcontainers. Die Aufnahmeklaue ist dabei als Doppelklaue mit zwei Hakenmäulern ausgebildet, die voneinander beabstandet und durch einen Trennsteg voneinander getrennt sind, der beim Greifen des Kettenbocks in den zwischen den Rundprofilen des Kettenbocks vorgesehenen Spalt eingreift. Hierdurch kann ein sicheres Greifen des Kettenbocks erreicht werden.

Vorzugsweise ist die Aufnahmeklaue drehbar an dem Greifarm gelagert. Die Dreh- bzw. Schwenkbarkeit der Aufnahmeklaue erlaubt es trotz des großen Schwenkbereichs des Greifarms und der engen Platzverhältnisse am Kettenbock, den Kettenbock unmittelbar an der Aufnahmeklaue des Greifarms ohne Zwischenschaltung von biegeschlaffen Seilen, Ketten oder dergleichen anzukuppeln. Die genannte Aufnahmeklaue bildet ein Aufnahmeglied, das derart ausgebildet und an den Kettenbock angepasst ist, dass der Kettenbock davon formschlüssig greifbar ist. Zweckmäßigerweise ist die Dreh- bzw. Schwenkachse der zumindest einen Aufnahmeklaue am Greifarm parallel zur Greifarmschwenkachse, so dass die Aufnahmeklaue zumindest teilweise die Schwenkbewegung des Greifarms ausgleichen kann, d. h. sich die Aufnahmeklaue trotz des großen Schwenkbereichs des Greifarms nicht genauso weit relativ zum Container bzw. dessen Kettenbock dreht.

Bei der schwenkbaren Lagerung der Aufnahmeklaue sind die beiden Hakenmäuler vorzugsweise miteinander verbunden, um stets dieselbe Winkelstellung einzunehmen, was insbesondere das Einfädeln des Kettenbocks erleichtert. Zweckmäßigerweise können die beiden Hakenmäuler über einen Quersteg starr miteinander verbunden sein, so dass sie stets dieselbe Winkelstellung relativ zum Greifarm einnehmen.

In alternativer Ausführung der Erfindung kann die Aufnahmeklaue jedoch auch starr an dem Greifarm befestigt sein. Es hat sich in der Praxis als schwierig erwiesen, mit einer pendelnd angehängten Aufnahmeklaue ein gezieltes Ankoppeln zu erreichen, da die Aufnahmeklaue nur schwer genau genug positioniert werden kann. Mit einer starren Aufnahmeklaue kann der Kettenbock leichter gefunden werden. Vorzugsweise ist zur weiteren Erleichterung des Einfädelns am Ende des Greifarms eine in das Maul der Aufnahmeklaue führende Einführschräge vorgesehen, entlang derer der Kettenbock in das Maul der Aufnahmeklaue rutscht, auch wenn der Kettenbock nicht exakt über der Öffnung der Aufnahmeklaue sitzt.

Wird mit dem Greifarm die Aufnahmeklaue unter dem Kettenbock des Containers positioniert und durch die entsprechende Bewegung des Greifarms der Container angehoben, so bewegt sich beim Aufnehmen des Containers bis auf seine etwa waagrechte Lage auf dem Fahrzeug der Hakenarm sowohl durch seine eigene Schwenkbewegung als auch die Schwenkbewegung des Kipprahmens um mehr als 180°, regelmäßig sogar um mehr als 200°, nach einer Ausführung der Erfindung um etwa 230°. Hierdurch entsteht die Gefahr, dass die Aufnahmeklaue den Container bzw. den Kettenbock nicht sicher festhalten kann, wenn der Container von der auf dem Fahrgestell des Fahrzeugs festen Presse wieder abgedockt und zum Absetzen zurückgehoben werden soll. In Weiterbildung der Erfindung ist deshalb am Greifarm ein Riegelelement vorgesehen, dass in Abhängigkeit der Schwenkstellung des Greifarms den Kettenbock des Containers in der Aufnahmeklaue verriegelt. Insbesondere ist das Riegelelement in einer hochgeschwenkten Stellung, wenn der Container auf den Kipprahmen gezogen ist, in einer verriegelnden Stellung, in der das Riegelelement ein Herausrutschen des Kettenbocks aus der Maulöffnung der Aufnahmeklaue verhindert, während das Riegelelement in einer abgesenkten Ladestellung des Greifarms, in der ein Container aufgenommen bzw. abgesetzt werden soll, in seiner entriegelten Stellung ist. Das Riegelelement verhindert also insbesondere beim anfänglichen Zurückschwenken des Greifarms aus der Containertransportstellung, also beim Abdocken des Wechselcontainers von der vor dem Kipprahmen befindlichen Presse, dass der Kettenbock aus der Aufnahmeklaue herausrutscht.

In Weiterbildung der Erfindung wird das Riegelelement von einem Betätigungsmechanismus bei Erreichen einer vorbestimmten Schwenkstellung automatisch betätigt. Der Betätigungsmechanismus kann derart ausgebildet sein, dass das Riegelelement in seine verriegelnde Stellung gebracht wird, wenn der Greifarm aus seiner herabgeschwenkten Aufnahmestellung um mehr als 45°, vorzugsweise mehr als 90° nach oben geschwenkt wird. Nach einer Ausbildung der Erfindung kann die freie Öffnung der Aufnahmeklaue bei einer Drehbewegung des Greifarms von ca. 100° verschlossen werden. Zweckmäßigerweise bleibt die verriegelnde Stellung bis in die vollständig aufgezogene Transportstellung erhalten und wird erst dann wieder gelöst, wenn der Greifarm unter die genannte Winkelstellung zurückgeschwenkt wird. Durch ein Verriegeln des Kettenbocks in der Aufnahmeklaue in der oberen Hälfte des Schwenkbereichs des Greifarms wird zum einen eine größere Stabilität bzw. Sicherheit in der kritischen Phase der Handhabung des Containers erreicht. Zum anderen wird ein reibungsloses Abdocken bzw. Zurückschieben und - schwenken des Containers aus seiner Transportstellung sichergestellt.

Vorzugsweise ist eine Zwangsverriegelung des Kettenbocks am Greifarm in dem genannten oberen Schwenkbereich vorgesehen. Der Betätigungsmechanismus kann als mechanische Zwangssteuerung ausgebildet sein, die das Riegelelement bei Erreichen der vorbestimmten Schwenkstellung des Greifarms in seine verriegelte Stellung zwingt.

In Weiterbildung der Erfindung kann als Riegelelement eine schwenkbar am Greifarm angelenkte Klaue vorgesehen sein, die mit einem Betätigungshebel verbunden ist, der beim Schwenken des Greifarms mit der Aufnahmeklaue und/oder dem Kettenbock bzw. einem anderen Containerteil in Eingriff gerät und von diesem betätigt wird. Es ist also quasi eine Selbstverriegelung vorgesehen. Der Container drückt das Riegelelement bei entsprechender Schwenkstellung des Greifarms selbst zu. Die schwenkbar am Greifarm angelenkte Riegel- bzw. Abdockklaue sowie die Aufnahmeklaue bilden ein Paar gegensinnig ausgerichteter, zusammenschwenkbarer Klauen bzw. Haken, die im oberen Schwenkbereich des Greifarms nach Art einer Falle, in der der Kettenbock gefangen wird, zusammenschwenken.

Vorzugsweise ist die Riegel- bzw. Abdockklaue über ein Langloch sowohl verschiebbar als auch drehbar am Greifarm befestigt, wobei der Betätigungshebel mit seinem einen Ende schwenkbar am Greifarm und mit seinem anderen Ende schwenkbar an der genannten Klaue angelenkt ist. Der Betätigungshebel und die Verriegelungsklaue bilden sozusagen einen Zweischlag. Drückt der Container gegen den Betätigungshebel, wird die Verriegelungsklaue gedreht und verschoben, so dass sie formschlüssig den Kettenbock umgreift.

Grundsätzlich wäre ein einzelnes Riegelelement ausreichend. Vorzugsweise sind jedoch zwei voneinander beabstandete Riegelelemente vorgesehen, die vorzugsweise auf gegenüberliegenden Seiten der Aufnahmeklaue angeordnet sind.

Nach einer weiteren bevorzugten Ausführung der Erfindung kann als Riegelelement zumindest ein Schieber vorgesehen sein, der längsverschieblich an dem Greifarm gelagert und über den in der Aufnahmeklaue sitzenden Kettenbock schiebbar ist und den Kettenbock formschlüssig in der Aufnahmeklaue hält. Der Schieber versperrt dabei den Weg des Kettenbocks aus der zu einer Seite offenen Aufnahmeklaue heraus. Grundsätzlich wäre ein einzelner Schieber vorzugsweise mittig über der Aufnahmeklaue ausreichend. Vorteilhafterweise sind jedoch zwei Schieber rechts und links von der Aufnahmeklaue vorgesehen.

Eine Betätigungseinrichtung für die beiden Schieber kann vorzugsweise als Hydraulikzylinder ausgebildet sein, der einerseits an dem Greifarm oder der Aufnahmeklaue und andererseits an einem Querträger angelenkt ist, der die beiden Schieber verbindet. Durch den Hydraulikzylinder können die Schieber sowohl in ihre verriegelte Stellung als auch in ihre entriegelte Stellung geschoben werden. In Weiterbildung der Erfindung können die Schieber aus hochkantstehenden Riegelplatten bestehen, die in entsprechenden Schiebeführungen am Ende des Greifarms geführt sind, wobei zweckmäßigerweise Langlochführungen vorgesehen sein können. Anschläge, die von der Langlochführung gebildet sein können, definieren einerseits die verriegelte Stellung und andererseits die entriegelte Stellung der Schieber.

In alternativer Weiterbildung der Erfindung kann als Betätigungseinrichtung für die Schieber auch eine Federeinrichtung vorgesehen sein, die die Schieber in ihre verriegelnde Stellung vorspannt. Um die Schieber dennoch automatisch öffnen zu können, besitzen diese vorzugsweise Betätigungsabschnitte, die mit dem Container in Eingriff geraten, und zwar dann, wenn dieser beim Absetzen eine bereits relativ bodennahe Stellung erreicht und der Greifarm eine entsprechende vorgegebene Winkelstellung erreicht hat. Wird der Container sodann weiter abgesetzt, drückt dieser auf die Betätigungsabschnitte der Schieber und drückt diese auf. Vorzugsweise sind die Betätigungsabschnitte der Schieber als Keilfläche an diesen ausgebildet. Mittels dieser Keilflächen können die Schieber auch geöffnet werden, wenn ein am Boden abgesetzter Container von dem Greifarm gegriffen wird. Wird der Greifarm mit der Aufnahmeklaue von unten her an den Kettenbock geschwenkt, geraten die Keilflächen mit dem jeweiligen Querrohrabschnitt des Kettenbocks in Eingriff und werden von diesem aufgedrückt. Sobald die Querrohrabschnitte in die Aufnahmeklaue gefallen sind, schnappen die Schieber durch ihre Federvorspannung selbsttätig zu.

Die Erfindung wird nachfolgend anhand eines bevorzugten Ausführungsbeispiels und zugehöriger Zeichnungen näher erläutert. In den Zeichnungen zeigen:
- Fig. 1: eine ausschnittsweise Seitenansicht eines Containerfahrzeugs nach einer bevorzugten Ausführung der Erfindung, das dessen Containerwechselvorrichtung in einer abgesenkten Ladestellung mit einem am Boden stehenden Container zeigt,
- Fig. 2, 3: Zwischenstellungen der Containerwechselvorrichtung beim Aufnehmen des Containers aus Fig. 1,
- Fig. 4: das Containerfahrzeug aus den vorhergehenden Figuren in einer Seitenansicht, wobei der Container in seiner Transportstellung gezeigt ist, in der er an einer in Fahrtrichtung vor der Containerwechselvorrichtung angeordneten Presse angedockt ist,
- Fig. 5: eine perspektivische Heckansicht des Fahrzeugs aus den vorhergehenden Figuren, die einen Greifarm in verschiedenen Schwenkstellungen zeigt, an dessen freiem, auskragenden Ende Kupplungsmittel zum Greifen des Wechselcontainers vorgesehen sind,
- Fig. 6: eine Seitenansicht des Greifarms aus der vorhergehenden Figur in verschiedenen Schwenkstellungen, die das Zusammenwirken einer Aufnahmeklaue und einer Verriegelungs- bzw. Abdockklaue zeigt,
- Fig. 7: eine ausschnittsweise Seitenansicht des Fahrzeugs mit dem Container in seiner vorderen Endlage bzw. Transportstellung, in der er am Pressengehäuse angekoppelt ist,
- Fig. 8: eine isometrische Darstellung der vorderen Endlage bzw. Transportstellung des Containers, die die Position der Aufnahme- und Abdockklauen zeigt, wenn der Container angekoppelt ist,
- Fig. 9: eine perspektivische, ausschnittsweise Ansicht eines Greifarms eines Containerfahrzeugs ähnlich Fig. 1 nach einer weiteren bevorzugten Ausführung der Erfindung, bei der eine starr an dem Greifarm befestigte Aufnahmeklaue mit zwei von einem Hydraulikzylinder betätigbaren Verriegelungsschiebern vorgesehen ist, und
- Fig. 10: eine perspektivische, ausschnittsweise Ansicht eines Greifarms eines Containerfahrzeugs ähnlich der vorhergehenden Figur nach einer weiteren bevorzugten Ausführung der Erfindung, bei der eine starr an dem Greifarm befestigte Aufnahmeklaue sowie zwei mit einer Federeinrichtung vorgespannte Verriegelungsschieber vorgesehen sind.

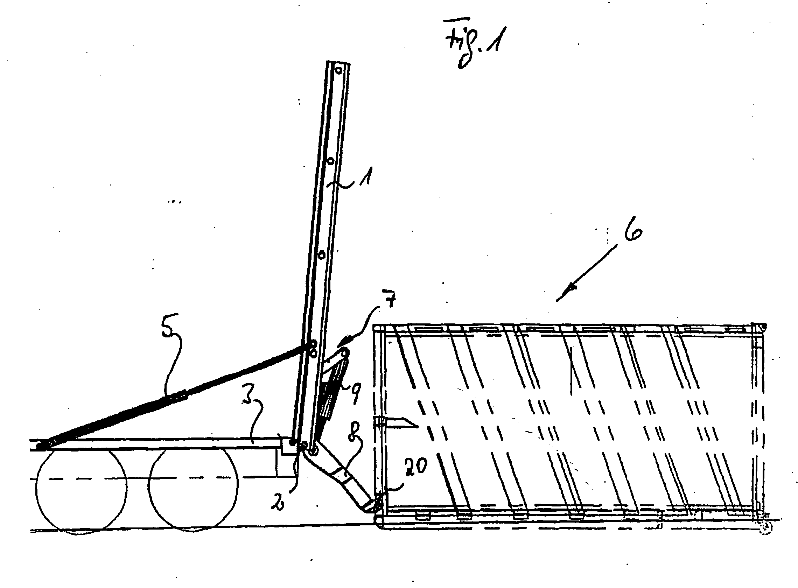

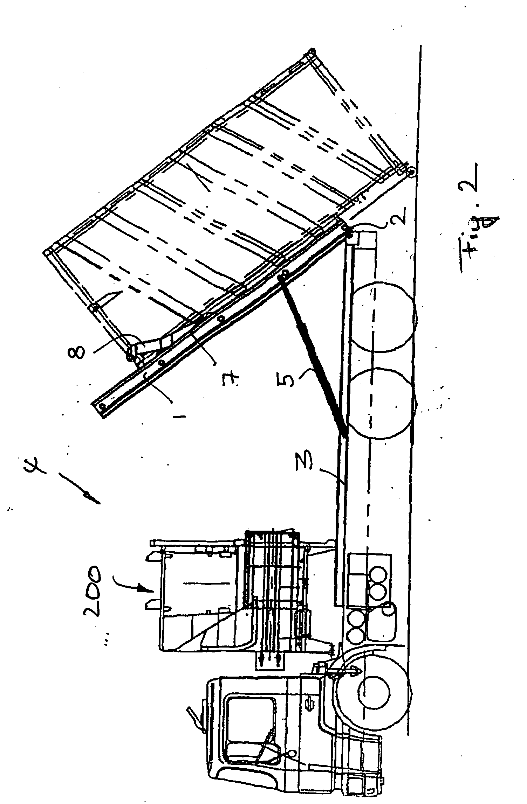

Wie Figur 1 zeigt, ist der Kipprahmen 1 im Bereich seiner hinteren Seite um die horizontale, quer zur Fahrzeuglängsrichtung verlaufende Schwenkachse 2 schwenkbar am Chassis 3 des in Figur 2 ganz gezeigten Müllfahrzeugs 4 angelenkt. Der Kipprahmen 1 kann in an sich bekannter Weise durch einen Hydraulikzylinder 5 verschwenkt werden, insbesondere bis in die in Figur 1 gezeigte etwa vertikale Stellung aufgerichtet werden. An dem Kipprahmen 1 ist ein Schlitten 7 in Längsrichtung verfahrbar. An dem verfahrbaren Schlitten 7 ist der Greifarm 8 schwenkbar gelagert, und zwar um eine ebenfalls horizontale Querachse, die am hinteren bzw. gemäß Figur 1 unteren Ende des Schlittens 7 angeordnet ist. Der Schwenkarm 8 kann über eine Schwenkzylinderanordnung 9, die mehrere Schwenkzylinder und schwenkbare Lenker umfasst, relativ zu dem Schlitten 7 verschwenkt werden. Bezüglich der Anordnung des Schlittens 7 auf dem Kipprahmen 1 sowie der Schwenkzylinderanordnung zum Verschwenken des Greifarms 8 wird auf die DE 200 19 391 Bezug genommen.

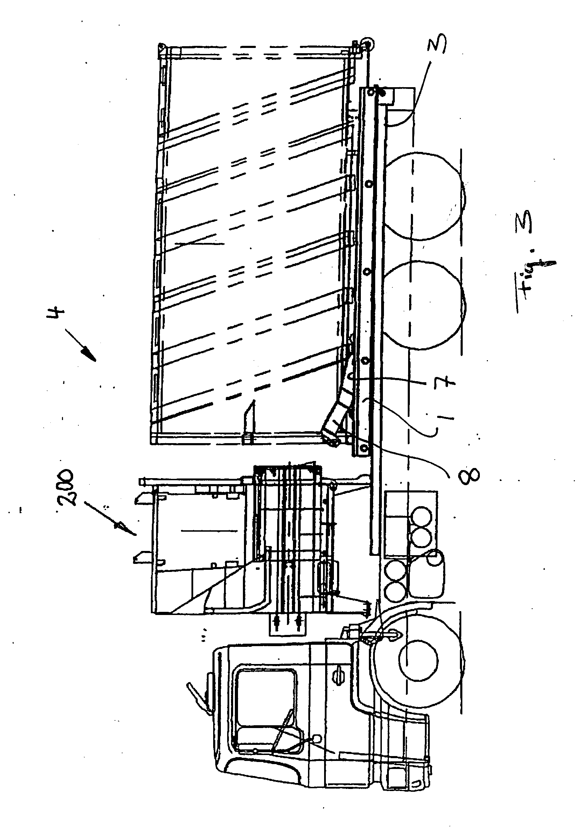

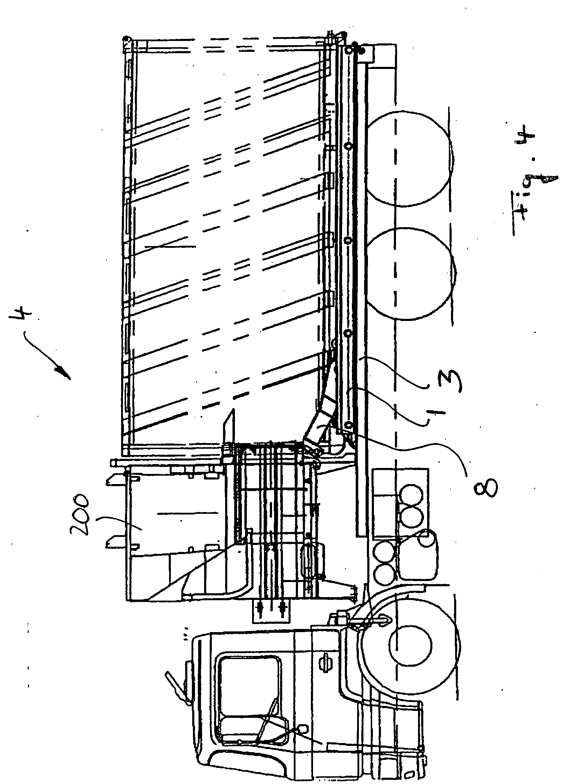

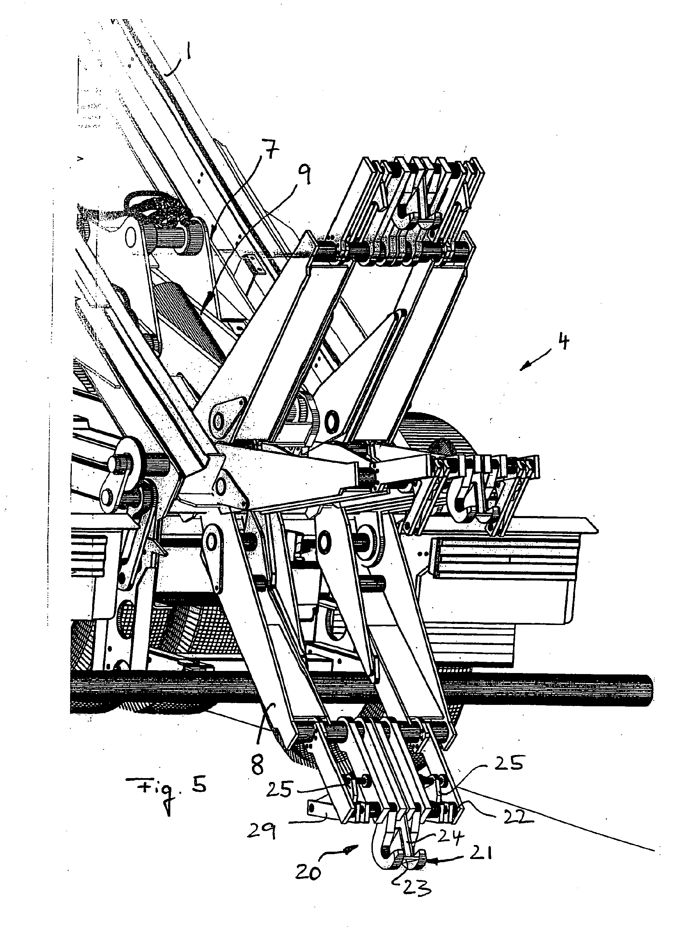

An seinem freien Ende trägt der Greifarm 8 Kupplungsmittel 20, mittels derer der Kettenbock eines Kettenbockcontainers gegriffen werden kann. Die Kupplungsmittel 20 sind in den Figuren 5 bis 8 näher dargestellt.

Wie Figur 5 zeigt, umfassen die Kupplungsmittel 20 eine Aufnahmeklaue 21, die am frei auskragenden Ende des Greifarms 8 um eine sich etwa horizontal erstrekkende Querachse 22 drehbar bzw. schwenkbar angelenkt ist. Wie Figur 5 zeigt, besteht die Aufnahmeklaue 21 aus einer Doppelklaue mit zwei parallel angeordneten Hakenmäulern, die voneinander beabstandet sind und mittels eines Querstegs 23 starr miteinander verbunden sind. Ein Trennsteg 24 trennt die beiden Hakenmäuler voneinander.

Die Aufnahmeklaue 21 ist relativ zu dem Greifarm 8 nur um die Aufnahmeklauendrehachse 22 bewegbar. Sie kann sich nicht quer verdrehen. Hierdurch kann ein kippfreies Greifen des Containers erreicht werden.

An dem frei auskragenden Ende des Greifarms 8 sind des weiteren zwei Abdockklauen 25 schwenkbar angelenkt. Die Schwenkachsen der Abdockklauen 25 sind vom freien Ende des Greifarms 8 leicht zurückgesetzt und erstrecken sich parallel zur Schwenkachse der Aufnahmeklaue 21. Wie Figur 5 zeigt, sind die beiden Abdockklauen 25 rechts und links von der Aufnahmeklaue 21 angeordnet.

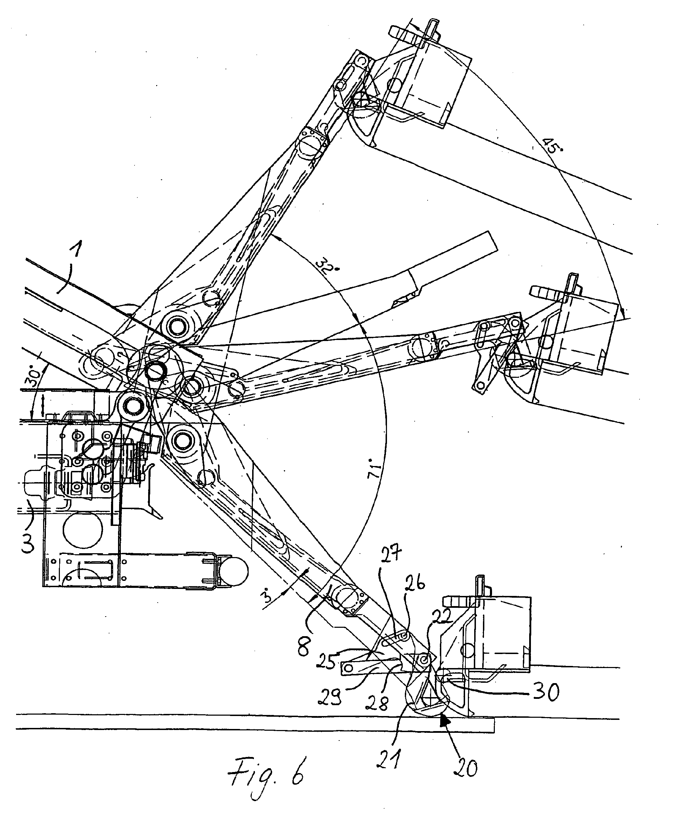

Wie insbesondere Figur 6 zeigt, sitzen die Abdockklauen 25 mit einem Langloch auf der Abdockklauenschwenkachse 26, so dass sie nicht nur schwenkbar, sondern auch verschieblich sind. Wie Figur 6 zeigt, verläuft das Langloch 27 quer zur konkaven Verriegelungsfläche 28 der Abdockklaue 25, mit der diese den Kettenbock sperrt.

Jede der Abdockklauen 25 ist mit einem Betätigungshebel 29 verbunden, der in der entriegelten Stellung auf der Unterseite des Greifarms 8 über diesen vorspringt. Wie Figur 6 zeigt, sind die Betätigungshebel 29 einerseits schwenkbar mit den Abdockklauen 25 und andererseits schwenkbar mit dem Greifarm 8 verbunden. Mit ihrem greifarmseitigen Ende sitzen die Betätigungshebel 29 auf der Schwenkachse der Aufnahmeklaue 21.

Die Aufnahmeklaue 21 sowie die Abdockklauen 25 besitzen einander entgegengerichtete Greifflächen bzw. Öffnungen und bilden zusammen eine zusammenschwenkbare Falle, in der der Kettenbock des Kettenbockcontainers gefangen wird, wenn der Greifarm 8 nach oben geschwenkt wird.

Zum Aufladen des Containers wird folgendermaßen vorgegangen:

Zunächst wird der Kipprahmen 1 in die in Figur 1 gezeigte aufgerichtete Stellung geschwenkt und der Schlitten 7 an das hintere Ende des Kipprahmens 1 gefahren.

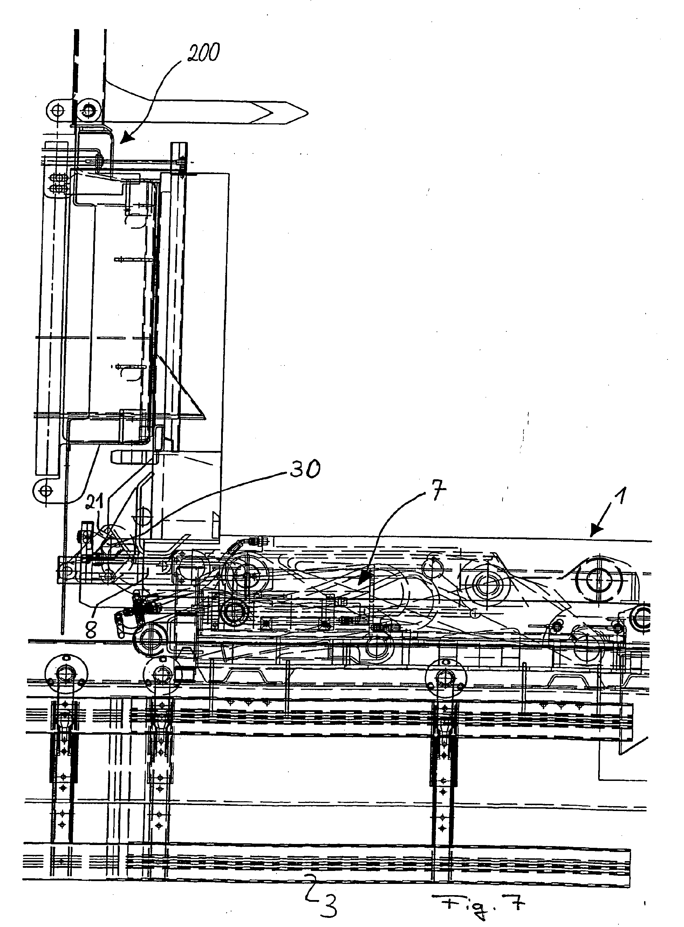

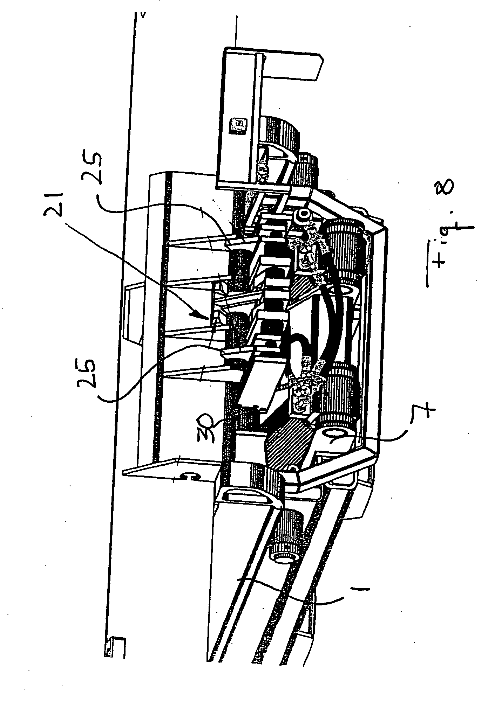

Zudem wird der Greifarm 8 in die in Figur 1 gezeigte nach unten geschwenkte Stellung geschwenkt, so dass die Aufnahmeklaue unter dem Kettenbock 30 des Containers zu liegen kommt. Der Kettenbock 30 besteht aus einem stabförmigen Rundprofil 31, das über vier Stegplatten 32 an der Vorderseite des Containers festgeschweißt ist (vgl. Figur 8). Das Rundprofil 31 wird von zwei koaxialen Profilstükken gebildet, die voneinander durch einen Schlitz beabstandet sind.

Sodann wird der Greifarm leicht nach oben geschwenkt, so dass die Aufnahmeklaue 21 das Rundprofil 31 des Kettenbocks 30 greift. Sodann wird zunächst der Kipprahmen 1 ein Stück weit zurückgeschwenkt, wobei gleichzeitig der Greifarm 8 mitgenommen wird, so dass der Container an seiner Vorderseite vom Boden hochgehoben wird. Es wird hierdurch die in Figur 6 gezeigte mittlere Stellung des Greifarms 8 erreicht. Sodann wird der Greifarm 8 relativ zum Schlitten 7 geschwenkt, bis die in Figur 6 obere Stellung des Greifarms 8 erreicht wird. Während dieser Schwenkbewegung drückt der Container bzw. sein Kettenbock 30 auf die Betätigungshebel 29, so dass die Abdockklaue 25 vorgeschoben und über den Kettenbock 30 geschwenkt wird. Die Abdockklauen 25 hinter- bzw. übergreifen dabei den Kettenbock 30 von einer Seite her, zu der hin die Aufnahmeklaue 21 ihre Maulöffnung besitzt. Wie aus Figur 6 hervorgeht, verschwenken bei der Aufziehbewegung sowohl die Aufnahmeklaue 21 als auch die Abdockklauen 25. Sie schnappen quasi wie eine Falle zu. In der in Figur 6 gezeigten oberen Stellung, die um etwa 100° oberhalb der abgesenkten Aufnahmestellung ist, gerät der Kettenbock 30 an der Unterseite des Greifarms 8 zur Anlage, so dass ein weiteres Verschwenken der Aufnahmeklaue 21 verhindert ist. Durch weiteres Verschwenken des Greifarms 8 nach oben sowie nach oben Fahren des Schlittens 7 sowie nach unten Schwenken des Kipprahmens 1 wird der Container auf den Kipprahmen 1 aufgezogen, wie dies die Figuren 2 und 3 verdeutlichen. Ist der Kipprahmen 1 vollständig auf den Fahrzeugrahmen abgesenkt, wie dies Figur 3 zeigt, kann der Schlitten 7 gänzlich nach vorne gefahren werden, bis der Container mit seiner Vorderseite an der Presse 200 andockt.

Die angedockte Stellung des Containers zeigt Figur 7. Der Greifarm 8 ist relativ zum Schlitten soweit geschwenkt, dass er sich in etwa horizontal erstreckt. Insgesamt hat der Greifarm also einen Schwenkwinkel von etwa 230° zurückgelegt. In der gezeigten angedockten Stellung ist der Kettenbock des Containers immer noch zwischen der Aufnahmeklaue 21 und den Abdockklauen 25 gefangen. Diese verriegelte Stellung ist in Figur 8 verdeutlicht, die die Vorderseite des Containers in der angedockten Stellung zeigt.

Um den Container wieder abzusetzen, wird in entsprechender Reihenfolge rückwärts vorgegangen.

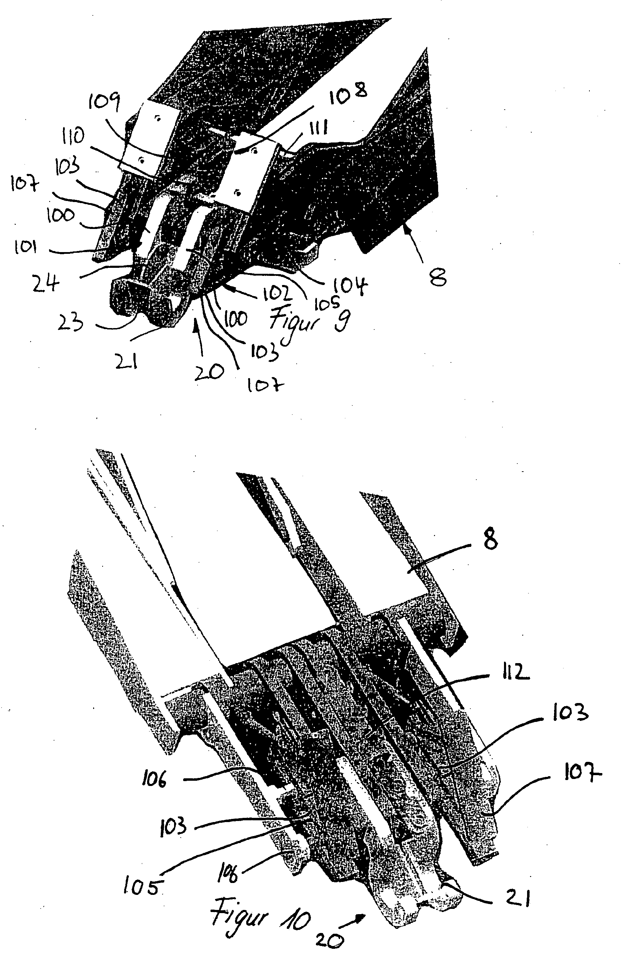

Figur 9 zeigt eine alternative Ausführung des Greifarms 8. Ähnlich der zuvor beschriebenen Ausführung trägt der Greifarm 8 als Kupplungsmittel 20 an seinem Ende eine Aufnahmeklaue 21, die allerdings nicht drehbar gelagert, sondern starr an dem Greifarm befestigt ist. Wie zuvor beschrieben besteht die Aufnahmeklaue 21 aus einer Doppelklaue mit zwei parallel angeordneten Hakenmäulern, die voneinander beabstandet sind und mittels eines Querstegs 23 starr miteinander verbunden sind. Ein Trennsteg 24 trennt die beiden Hakenmäuler voneinander.

Wie Figur 9 zeigt, besitzt die Aufnahmeklaue 21 zwei schräge Flanken 100, die eine in das Maul der Aufnahmeklaue 21 führende Einführschräge 101 bilden. Beim Greifen eines Containers können die Querprofile des entsprechenden Kettenbocks auf der Einfuhrschräge 101 abgleiten und fallen in das Maul der Aufnahmeklaue 21 auch dann, wenn der Container nicht exakt richtig zu dem Greifarm 8 positioniert ist. Dies erleichtert das Greifen des Containers beträchtlich.

Als Riegelelement 102 zur Verriegelung des Kettenbocks in der Aufnahmeklaue 21 sind zwei in Längsrichtung des Greifarms 8 verschieblich gelagerte Schieber 103 am Ende des Greifarms 8 vorgesehen, die auf gegenüberliegenden Seiten der Aufnahmeklaue 21 angeordnet sind. Die Schieber 103 bestehen jeweils aus hochkantstehenden Platten, die zwischen Lagerplatten 104 am Ende des Greifarms 8 verschieblich geführt sind. Sie weisen dabei eine Langlochführung 105 auf. Wie Figur 9 zeigt, sind in den Schiebern 103 jeweils zwei Langlöcher ausgebildet, in denen Querbolzen 106 sitzen, die mit dem Greifarm 8 starr verbunden sind. Hierdurch sind die Schieber 103 definiert in eine verriegelnde Stellung ausfahrbar und in eine entriegelte Stellung einfahrbar. Auch die Schieber 103 besitzen schrägverlaufende Flanken 107, die parallel zu den Flanken 100 der Aufnahmeklaue 21 geneigt sind. In der zurückgezogenen, entriegelten Stellung liegen die Flanken 107 der Schieber 103 mit den Flanken 100 der Aufnahmeklaue 21 in einer Ebene. Sie definieren mit diesen zusammen die Einfuhrschräge 101.

Als Betätigungseinrichtung 108 für die Schieber 103 ist ein Hydraulikzylinder 109 vorgesehen, der einerseits greiferarmfest an einem Abschnitt 110 der Aufnahmeklaue 21 und andererseits an einem Querprofil 111 angelenkt ist, das die beiden Schieber 103 verbindet. Durch Betätigung des Hydraulikzylinders 109 können die Schieber 103 geöffnet und geschlossen werden. Eine Steuereinrichtung kann dabei die Betätigungseinrichtung 108 in geeigneter Weise ansteuern. Dabei kann vorgesehen sein, dass eine automatische Ansteuerung in Abhängigkeit der Schwenkstellung des Greifarms erfolgt, d.h. wenn der Greifarm in eine bodennahe Stellung geschwenkt wird, steuert die Steuereinrichtung die Betätigungseinrichtung 108 an, um die Schieber zu öffnen. Wird der Greifarm über eine vorgegebene Stellung hinaus nach oben geschwenkt, steuert die Steuereinrichtung die Betätigungseinrichtung 108 an, um die Schieber zu schließen.

Die in Figur 10 gezeigte alternative Ausführung des Greifarms 8 entspricht im wesentlichen der soeben in Verbindung mit Figur 9 beschriebenen. Auch hier sind eine starre Aufnahmeklaue 21 sowie translatorisch verschiebbare Schieber 103 als Riegelelemente 102 vorgesehen, so dass insoweit auf die vorangehende Beschreibung verwiesen wird. Im Unterschied zu der Ausführung nach Figur 9 werden die Schieber 103 nicht durch einen Hydraulikzylinder betätigt, sondern vielmehr durch eine Gasfeder 112 in ihre ausgefahrene, verriegelnde Stellung vorgespannt. Die Flanken 107 an den Schiebern 103 bilden Betätigungsabschnitte, die mit dem Container in Eingriff gelangen, sobald der Greifarm 8 beim Absenken des Containers über eine bestimmte Winkelstellung hinaus nach unten geschwenkt wird. Der entsprechende Containerabschnitt gleitet dabei auf den Flanken 107 ab, wodurch die Schieber 103 entgegen der Vorspannung der Gasfeder 112 aufgedrückt werden. Selbiges erfolgt beim Greifen eines auf dem Boden stehenden Containers. Wird der Greifarm mit der Aufnahmeklaue 21 von unten an den Kettenbock geschwenkt, drückt ein entsprechender Containerabschnitt über die Flanken 107 die Verriegelungsschieber 103 auf. Fällt der Kettenbock in die Aufnahmeklaue 21, schnappen die Schieber 103 von der Gasfeder 112 betätigt in die verriegelnde Stellung.

## Patentansprüche

1. Containerfahrzeug, insbesondere Abfallsammelfahrzeug, zum Transport von Containern, mit einer Containerwechselvorrichtung (10) zum Auf- und Abladen eines Containers, die einen um eine Kippachse (2) schwenkbaren Kipprahmen (1), einen auf dem Kipprahmen (1) verfahrbaren Schlitten (7) sowie einen am Schlitten (7) um eine Greifarmschwenkachse (11) schwenkbar gelagerten Greifarm (8) aufweist, an dem Kupplungsmittel (20) zum Ankuppeln des Greifarms (8) an den Container vorgesehen sind, **dadurch gekennzeichnet, dass** die Kupplungsmittel (20) eine am Greifarm (8) gelagerte Aufnahmeklaue (21) mit zwei Hakenmäulern, die voneinander beabstandet und durch einen Trennsteg (24) voneinander abgeteilt sind, zum Aufnehmen eines Kettenbocks (30) eines Kettenbockcontainers aufweist.

2. Fahrzeug nach dem vorhergehenden Anspruch, wobei die Aufnahmeklaue (21) um eine Querachse drehbar an dem Greifarm (8) gelagert ist.

3. Fahrzeug nach dem Anspruch 1, wobei die Aufnahmeklaue (21) starr an dem Greifarm (8) befestigt ist.

4. Fahrzeug nach einem der vorhergehenden Ansprüche, wobei am Greifarm (8) ein Riegelelement (25) vorgesehen ist, das vorzugsweise in Abhängigkeit der Schwenkstellung des Greifarms (8) den Kettenbock (30) des Containers in der Aufnahmeklaue (21) verriegelt.

5. Fahrzeug nach dem vorhergehenden Anspruch, wobei dem Riegelelement (25) ein Betätigungsmechanismus (29), vorzugsweise eine mechanische Zwangssteuerung, zugeordnet ist, der das Riegelelement (25) bei Erreichen einer vorbestimmten Schwenkstellung des Greifarms (8) in seine verriegelnde Stellung zwingt.

6. Fahrzeug nach dem vorhergehenden Anspruch, wobei das Riegelelement eine schwenkbar am Greifarm (8) angelenkte Klaue (25) ist und mit einem Betätigungshebel (29) verbunden ist, der beim Schwenken des Greifarms (8) mit der Aufnahmeklaue (21) und/oder dem Kettenbock (30) und/oder einem Containerteil in Eingriff gerät.

7. Fahrzeug nach dem vorhergehenden Anspruch, wobei eine über ein Langloch (27) verschiebbar und drehbar am Greifarm (8) befestigte Klaue (25) vorgesehen ist, mit der ein schwenkbar am Greifarm (8) angelenkter Betätigungshebel (29) nach Art eines Zweischlags drehbar verbunden ist.

8. Fahrzeug nach einem der vorhergehenden Ansprüche, wobei die Aufnahmeklaue (21) frei von einem fremdenergiebetätigten Antrieb und/oder eine frei von einem fremdenergiegetriebenen Antrieb betätigte Verriegelung zur Verriegelung des Containerbocks in der Aufnahmeklaue vorgesehen ist.

9. Fahrzeug nach einem der vorhergehenden Ansprüche, wobei die Aufnahmeklaue (21) zusammen mit zumindest einer schwenkbar am Greifarm (8) befestigten Abdockklaue (25) eine zusammenschwenkbare Falle bildet, in der der Kettenbock (30) eines Containers beim Aufladen gefangen wird.

10. Fahrzeug nach Anspruch 4, wobei das Riegelelement (102) mindestens einen Schieber (103) aufweist, der längsverschieblich an dem Greifarm (8) gelagert und über den in der Aufnahmeklaue (21) sitzenden Kettenbock (30) des Containers schiebbar ist.

11. Fahrzeug nach dem vorhergehenden Anspruch, wobei dem Riegelelement (102) ein fremdenergiebetätigter Kraftheber (109), insbesondere ein Hydraulikzylinder, zugeordnet ist, mittels dessen das Riegelelement (102) in seine verriegelnde Stellung und/oder in seine entriegelnde Stellung bewegbar ist.

12. Fahrzeug nach Anspruch 10, wobei das Riegelelement (102) mittels einer Federeinrichtung (112) in seine verriegelnde Stellung vorgespannt ist und einen Betätigungsabschnitt (107) aufweist, der beim Abladen des Containers bei Erreichen einer vorgegebenen Winkelstellung des Greifarms (8) mit dem Container in Eingriff gelangt, so dass der Container beim weiteren Absenken das Riegelelement (102) gegen dessen Vorspannung aufdrückt.

13. Fahrzeug nach dem vorhergehenden Anspruch, wobei das Riegelelement (102) eine Keilfläche (107) besitzt, die beim Greifen des Containers mit diesem in Eingriff gelangt und das Riegelelement aufdrückt.

14. Fahrzeug nach einem der vorhergehenden Ansprüche, wobei das Riegelelement (102) in seiner entriegelten Stellung gegen einen Anschlag (103) fährt und eine in das Maul der Aufnahmeklaue (21) führende Einführschräge für den Kettenbock (30) bildet.
